# EUROPÄISCHE PATENTSCHRIFT

(11) **EP 3 112 085 B1**
(45) Veröffentlichungstag und Bekanntmachung des Hinweises auf die Patenterteilung: **07.11.2018**
(21) Anmeldenummer: 16176498.0
(22) Anmeldetag: 27.06.2016
(51) Int. Cl.: B23Q 3/06, B23Q 39/02

(54) **WERKZEUGMASCHINE MIT MEHREREN WERKZEUGSPINDELN**
MACHINE TOOL WITH A PLURALITY OF TOOL SPINDLES
MACHINE-OUTIL AVEC PLUSIEURS BROCHES D'OUTILS

(30) Priorität: 29.06.2015 DE 102015110447; 21.12.2015 DE 102015122470
(43) Veröffentlichungstag der Anmeldung: 04.01.2017
(73) Patentinhaber: Alfing Kessler Sondermaschinen GmbH, 73433 Aalen (DE)
(72) Erfinder: Stave, Hinrich, 72622 Nürtingen (DE); Wende, Michael, 73431 Aalen (DE)
(74) Vertreter: Patentanwälte Bregenzer und Reule Partnerschaftsgesellschaft mbB

(56) Entgegenhaltungen:
- EP-A1- 0 736 359
- EP-A1- 1 459 838
- EP-A1- 1 733 840
- DE-C1- 19 936 502

## Beschreibung

Die Erfindung betrifft eine Werkzeugmaschine mit mehreren nebeneinander angeordneten Werkzeugspindeln einer Spindelgruppe zur Bearbeitung von an einem Werkstückträger als Werkstückgruppe angeordneten Werkstücken in einem Bearbeitungsbereich der Mehrspindelmaschine gemäß Oberbegriff des Anspruchs 1.

Eine solche Werkzeugmaschine ist z.B. aus EP 1 733 840 bekannt.

Während der Bearbeitung der Werkstücke der einen Werkstückhaltergruppe können bei der anderen Werkstückhaltergruppe Werkstücke gewechselt werden, die dann wiederum in den Bearbeitungsbereich geschwenkt werden können, um dort bearbeitet zu werden. Allerdings ist die Leistungsfähigkeit einer derartigen Werkzeugmaschine eingeschränkt. Für die Bearbeitung von Werkstücken in großer Stückzahl ist eine höhere Effizienz gewünscht.

Aus EP 0 736 359 A1 geht ein Schalttrommelautomat in Gestalt einer Schweißmaschine hervor. Die Bearbeitungsmaschine besitzt eine Beladestation, eine Bearbeitungsstation und eine Entladestation sowie Bearbeitungswerkzeuge, beispielsweise Schweißelemente einer ersten Schweißstation.

Es ist daher die Aufgabe der vorliegenden Erfindung, eine verbesserte Werkzeugmaschine bereitzustellen.

Zur Lösung der Aufgabe ist bei einer Werkzeugmaschine gemäß der technischen Lehre des Anspruchs 1 vorgesehen.

Der erfindungsgemäße Ansatz ist es, dass der Werkstückträger Werkstücke zur Bearbeitung durch die Spindelgruppe bereitstellt, wo dann also eine der Werkstückhaltergruppen positioniert ist, gleichzeitig aber auch eine weitere Werkstückhaltergruppe zum Beladen des Werkstückträgers in dem Ladebereich und eine weitere Werkstückhaltergruppe zum Entladen des Werkstückträgers in dem Entladebereich positioniert ist. Der Werkstückträger kann also gleichzeitig beladen und entladen werden, wobei zudem sogar noch eine Werkstückbearbeitung während des Entladens und des Beladens möglich ist.

Die Werkzeugmaschine kann also mit hoher Effizienz und Taktzahl betrieben werden. Eine große Stückzahl von Werkstücken können gleichzeitig bearbeitet werden, während die Beladung und Entladung noch während der Werkstückbearbeitung stattfinden kann. An dieser Stelle sei aber bemerkt, dass ein Arbeitstaktung der Werkzeugmaschine vorsehen kann, dass beispielsweise während eines Arbeitstakts die Werkstückbearbeitung stattfindet und in mindestens einem weiteren, davon verschiedenen Arbeitstakt der Werkstückträger beladen und entladen wird. Es können aber auch zum Bearbeiten, Entladen und Beladen insgesamt drei Arbeitstakte notwendig sein.

Die voneinander separaten Bereiche zum Entladen und zum Beladen des Werkstückträgers haben z.B. den Vorteil, dass dort völlig unterschiedliche Werkstückfördereinrichtungen vorgesehen sein können oder die Werkstückfördereinrichtungen, die zum Beladen und zum Entladen vorgesehen sind, sich nicht gegenseitig behindern.

Eine vorteilhafte Ausgestaltung sieht vor, dass mindestens eine vierte Werkstückhaltergruppe vorhanden ist, die in einem Winkelabstand bezüglich der Schwenkachse des Werkstückträgers zu der ersten, zweiten und dritten Werkstückhaltergruppe am Werkstückträger vorgesehen ist.

Diese vierte Werkstückhaltergruppe oder weitere Werkstückhaltergruppe ermöglicht beispielsweise eine Wartung, insbesondere Kontrolle, Reinigung oder dergleichen, des Werkstückträgers, während die anderen Werkstückhaltergruppen beispielsweise zur Werkstückbearbeitung, zum Beladen, zum Entladen des Werkstückträgers oder dergleichen positioniert sind.

Die mindestens eine vierte Werkstückhaltergruppe kann aber auch dazu dienen, Werkstücke eines zweiten Werkstücktyps zu halten, der durch die erste, zweite oder dritte Werkstückhaltergruppe nicht gehalten werden kann oder sich jedenfalls von einem Werkstücktyp unterscheidet, der durch die erste, zweite oder dritte Werkstückhaltergruppe gehalten werden kann. Es ist auch möglich, dass die mindestens eine vierte Werkstückhaltergruppe dazu vorgesehen ist, zwar an sich dieselben Werkstücke oder Werkstücke desselben Werkstücktyps zu halten, die auch von der ersten, zweiten oder dritten Werkstückhaltergruppe gehalten werden können, jedoch in einer anderen Ausrichtung, beispielsweise einer anderen Axiallage und/oder Drehlage.

Besonders bevorzugt ist es, wenn die vierte Werkstückhaltergruppe zwischen zwei Werkstückhaltergruppen der ersten, zweiten und dritten Werkstückhaltergruppe angeordnet ist.

Weiterhin vorteilhaft ist es, wenn die vierte Werkstückhaltergruppe zwischen Werkstückhaltergruppen eines ersten Paares von Werkstückhaltergruppen angeordnet ist und eine fünfte, vorzugsweise auch eine sechste, Werkstückhaltergruppe zwischen Werkstückhaltergruppen eines zweiten bzw. eines dritten Paares von Werkstückhaltergruppen angeordnet ist. Die jeweiligen Paare von Werkstückhaltergruppen werden durch die erste, zweite und dritte Werkstückhaltergruppe bereitgestellt. Bevorzugt ist also eine sozusagen abwechselnde Anordnung, bei denen jeweils zwischen zwei Werkstückhaltergruppen der ersten, zweiten und dritten Werkstückhaltergruppe eine weitere Werkstückhaltergruppe angeordnet ist. In der Seitenansicht ist beispielsweise eine hexagonale Gestalt des Werkstückträgers möglich, wobei an jedem Seitenschenkel dieses Hexagons jeweils eine Werkstückhaltergruppe angeordnet ist.

Eine derartige Anordnung eignet sich beispielsweise dazu, dass die erste, zweite und dritte Werkstückhaltergruppe die gleichzeitige Beladung und Entladung des Werkstückträgers und zudem eine Werkstückbearbeitung ermöglichen. Die mindestens eine vierte, vorzugsweise fünfte und sechste Werkstückhaltergruppe kann beispielsweise dazu genutzt werden, dass die Werkzeugmaschine zur Bearbeitung unterschiedlicher Werkstücktypen geeignet ist, wobei die vierte, fünfte und sechste Werkstückhaltergruppe wiederum ein gleichzeitiges Entladen und Beladen des Werkstückträgers sowie eine während der Beladung oder Entladung erfolgende Werkstückbearbeitung ermöglichen. Beispielsweise können die erste, zweite und dritte Werkstückhaltergruppe während einer Schicht oder während eines Arbeitstages genutzt werden, während die vierte, fünfte und sechste Werkstückhaltergruppe in einer anderen Schicht, beispielsweise an einem anderen Arbeitstag zum Einsatz kommen. Die Werkstückträger muss nicht umgerüstet werden, um unterschiedliche Werkstücktypen zu halten.

Beispielweise taktet oder schwenkt der Werkstückträger um jeweils 120°, sodass die erste, zweite und dritte Werkstückhaltergruppe oder alternativ die vierte, fünfte oder sechste Werkstückhaltergruppe zum Einsatz kommen.

Es ist aber auch möglich, dass die vierte Werkstückhaltergruppe zweckmäßigerweise zudem die fünfte und sechste Werkstückhaltergruppe, dazu dienen, dass Werkstücke von einer der ersten, zweiten und dritten Werkstückhaltergruppe auf die mindestens eine vierte Werkstückhaltergruppe umpositioniert werden können, beispielsweise für einen alternativen Bearbeitungsschritt, insbesondere anhand anderer Bearbeitungswerkzeuge. In diesem Fall ist beispielsweise des Werkstückträgers ein Schwenkwinkel oder ein Takten um 30° vorgesehen.

Am Werkstückträger ist also zweckmäßigerweise neben der ersten und zweiten Werkstückhalteseite in einem Winkelabstand zu diesen Werkstückhalteseiten eine dritte Werkstückhalteseite mit der dritten Werkstückhaltergruppe vorhanden. Bevorzugt können aber auch weitere, dazu winkelige Werkstückhalteseiten, beispielsweise eine vierte Werkstückhalteseite für die vierte Werkstückhaltergruppe, vorgesehen sein.

An dieser Stelle sei bemerkt, dass die Rollen der Werkstückhaltergruppen durchwechseln, d.h. dass beispielsweise eine Werkstückhaltergruppe zunächst im Beladebereich steht, sodass der Werkstückträger mit Werkstücken beladen werden kann, anschließend die Werkstückträger dieser Werkstückhaltergruppe mit den daran gehaltenen Werkstücken in den Bearbeitungsbereich und schließlich in den Entladebereich schwenkt.

Wenn jedoch beispielsweise ein Wartungsbereich, insbesondere Reinigungsbereich oder dergleichen vorgesehen ist, kann die Werkstückhaltergruppe auf dem Weg zwischen dem Entladebereich und dem Beladebereich oder auf dem Weg vom Bearbeitungsbereich zum Entladebereich in den Wartungsbereich geschwenkt werden.

Die Spindelgruppe umfasst beispielsweise mindestens zwei, vorzugsweise weitere, insbesondere drei, vier oder fünf Werkzeugspindeln. Es können aber auch noch mehr Werkzeugspindeln bei der Spindelgruppe vorgesehen sein. Dadurch ist eine besonders effektive Werkstückbearbeitung möglich.

Auch bei einer jeweiligen Werkstückhaltergruppe ist es vorteilhaft, wenn sie mindestens zwei, vorzugsweise mehrere, beispielsweise drei, vier oder fünf oder weitere Werkstückhalter aufweist.

Die Werkzeugspindeln der Spindelgruppe sind vorzugsweise nebeneinander in einer Reihe angeordnet. Die Reihe kann eine lineare Reihe sein, d.h. dass die Spindeln entlang einer Linie nebeneinander angeordnet sind. Es ist aber auch möglich, dass die Werkzeugspindeln beispielsweise zickzackförmig oder bogenförmig nebeneinander angeordnet sind.

Vorzugsweise ist vorgesehen, dass die Werkstückhalter einer jeweiligen Werkstückhaltergruppe in einer Reihe, insbesondere linear, nebeneinander angeordnet sind.

Die Werkstückhalter oder die Werkzeugspindeln können aber auch beispielsweise kreisförmig, entlang eines Ringes, eines gekrümmten Bogens, zickzackförmig oder dergleichen angeordnet sein. Auch so ist eine Reihenanordnung möglich.

Es ist möglich, dass eine Werkstückhaltergruppe nur eine einzige Reihe von nebeneinander angeordneten Werkzeughaltern aufweist. Es ist aber auch möglich, dass eine Werkstückhaltergruppe mindestens zwei, vorzugsweise drei, Reihen mit Werkstückhaltern aufweist. Die Reihen der Werkstückhalter können beispielsweise parallel zueinander verlaufen. Es ist aber auch möglich, dass die Reihen zueinander schräg verlaufen und/oder unterschiedliche Geometrien haben. Beispielsweise ist es möglich, dass eine Reihe eine geradlinige ist, während eine andere Reihe einen gekrümmten Verlauf hat, beispielweise bogenförmig ist.

Es können gleiche Werkstückhalter in mindestens zwei Reihen von Werkstückhaltern vorgesehen sein. Die in diesen Reihen angeordneten Werkstücke können, müssen aber nicht simultan durch die Werkzeugspindeln bearbeitet werden. Beispielsweise ist es möglich, dass im Beladebereich beide Reihen von Werkstückhaltern belegt werden und die Werkstücke anschließend im Bearbeitungsbereich nacheinander durch die Werkzeugspindeln bearbeitet werden. Der Verfahrweg der Werkzeugspindeln von der einen Werkstück-Reihe zu anderen Werkstück-Reihe ist kurz und schnell zu bewerkstelligen.

Alle diese Varianten bezüglich Reihenanordnungen von Werkstückhaltern sind selbstverständlich auch bei der Spindelgruppe möglich, die beispielsweise nur eine einzige Reihe von Werkzeugspindeln aufweisen kann, aber auch mehrere Reihen von Werkzeugspindeln, die zwar vorzugsweise parallel zueinander verlaufen, aber auch eine andere Orientierung zueinander haben können. Auch die Reihen von Werkzeugspindeln, also die mindestens zwei Reihen, müssen nicht unbedingt denselben Verlauf haben oder linear sein, sondern können auch unterschiedliche Geometrien aufweisen.

Wenn eine Spindelgruppe mehrere Reihen, beispielsweise zwei Reihen oder drei Reihen, von Werkzeugspindeln aufweist, können diese Spindelreihen unterschiedliche Funktionen haben, beispielsweise Bohren und Reiben oder dergleichen. Es ist aber auch denkbar, dass mindestens zwei Reihen von Werkzeugspindeln oder mehrere Reihen von Werkzeugspindeln gleichen Aufgaben zugeordnet sind.

Reihen von Werkzeugspindeln oder Reihen von Werkzeughaltern verlaufen vorzugsweise horizontal.

Es ist ferner vorteilhaft, wenn die Spindelgruppe mindestens einen Werkzeugrevolver aufweist. Der mindestens eine Werkzeugrevolver weist einen um eine Revolverachse drehbaren Werkzeugträger zur Positionierung jeweils eines Bearbeitungswerkzeugs in eine Bearbeitungsposition und einen Werkzeugantrieb zum Dreh-Antreiben des in der Bearbeitungsposition befindlichen Bearbeitungswerkzeugs auf. Es ist möglich, dass zwei oder weitere Werkzeugrevolvers vorhanden sind. Es ist weiterhin vorteilhaft, wenn bei einer Anordnung mit mehreren Werkzeugrevolvern mindestens zwei Werkzeugrevolver in einer Reihenrichtung nebeneinander angeordnet sind.

Bevorzugt ist eine geometrische oder zahlenmäßige Korrelation zwischen einerseits den Werkzeugspindeln einer Spindelgruppe und andererseits den Werkstückhaltern mindestens einer Werkstückhaltergruppe oder aller Werkstückhaltergruppen. Beispielsweise ist die geometrische Anordnung der Werkzeugspindeln auf die geometrische Anordnung der Werkstückhalter abgestimmt. Linear nebeneinander angeordneten Werkzeugspindeln können also zur Bearbeitung von linear nebeneinander an entsprechend am Werkstückträger angeordneten Werkstückhaltern angeordneten Werkstücken vorgesehen sein. Wenn also die Werkstückhalter entlang einer geraden oder gekrümmten Linie angeordnet sind, sind das auch die Werkzeugspindeln.

Vorzugsweise ist eine Anzahl von Werkstückhaltern, die in einer Reihe nebeneinander angeordnet sind, gleich einer Anzahl von Werkzeugspindeln, die in einer Reihe nebeneinander angeordnet sind. Wenn also beispielsweise drei Werkstückhalter nebeneinander angeordnet sind, sind entsprechend drei Werkzeugspindeln nebeneinander angeordnet.

Es ist aber auch möglich, dass die Anzahl von Werkzeugspindeln kleiner als die Anzahl von Werkstückhaltern ist oder umgekehrt. Beispielsweise ist es möglich, dass die Anzahl von in einer Reihe angeordneten Werkstückhaltern ein ganzzahliges Vielfaches der Anzahl von in einer Reihe angeordneten Werkzeugspindeln darstellt oder ist. Ein derartiges Ausführungsbeispiel sieht vor, dass beispielsweise 3 oder 4 Werkzeugspindeln vorgesehen sind und die Anzahl der Werkstückhalter in diesem Fall 6 oder 8 beträgt. Die Werkzeugspindeln und die Werkstückhalter werden dann relativ zueinander verschoben, sodass die Werkzeugspindeln vorteilhaft sozusagen alle Werkstückhalter bedienen bzw. alle an den jeweiligen Werkstückhaltern angeordnete Werkstücke bearbeiten können.

Auch ein Abstand oder Querabstand zwischen in einer Reihe nebeneinander angeordneten Werkstückhaltern ist zweckmäßigerweise gleich dem Abstand zwischen in einer Reihe nebeneinander angeordneten Werkzeugspindeln.

Zweckmäßigerweise ist vorgesehen, dass mindestens eine Werkstückhaltergruppe mindestens zwei verschiedene Typen von Werkstückhaltern aufweist. Es ist auch möglich, dass zwei Werkstückhaltergruppen, die an unterschiedlichen Seiten des Werkstückträgers angeordnet sind, Werkstückhalter unterschiedlicher Typen haben oder aufweisen.

Mit dem Werkstückhaltern unterschiedlicher Typen können beispielsweise unterschiedliche Typen von Werkstücken gehalten werden. Es ist aber auch möglich, dass anhand der unterschiedlichen Typen von Werkstückhaltern Werkstücke in unterschiedlichen Positionen, beispielsweise einander entgegengesetzten Positionen, vom Werkstückträger gehalten werden. Beispielsweise können somit Werkstücke einmal in einer ersten Orientierung, einmal in einer anderen, zweiten Orientierung am Werkstückträger befestigt werden, sodass aufeinanderfolgende Bearbeitungen ohne weiteres möglich sind.

Es ist z.B. möglich, dass eine Reihe von Werkstückhaltern einer Werkstückhaltergruppe zu einem ersten Typ von Werkstückhaltern gehört, während eine andere Reihe von Werkstückhaltern zu einem zweiten Typ von Werkstückhaltern gehören.

Eine bevorzugte Ausführungsform der Erfindung sieht vor, dass mindestens ein Werkstückhalter eine Spannvorrichtung zum Spannen eines Werkstücks aufweist oder dadurch gebildet ist. Die Spannvorrichtung ist beispielsweise in der Art eines Bohrfutters ausgestaltet.

Vorzugsweise ist ferner vorgesehen, dass an mindestens ein Werkstückhalter ein Ausstoßer zum Ausstoßen von Werkstücken von dem Werkstückhalter angeordnet ist. Der Ausstoßer, beispielsweise ein Schieber, eine pneumatische Ausblasvorrichtung oder dergleichen, kann einen integralen Bestandteil des Werkstückhalters bilden oder daran angeordnet sein. Durch den Ausstoßer wird das Entladen der Werkstücke von dem Werkstückträger erleichtert.

Eine bevorzugte Ausführungsform der Erfindung sieht vor, dass mindestens zwei Werkzeugspindeln der Spindelgruppe an einem gemeinsamen Spindelträger angeordnet sind. Der Spindelträger ermöglicht z.B. eine simultane Verstellung sämtlicher Spindeln, die er trägt. Es ist auch möglich, dass der Spindelträger ortsfest steht.

Vorzugsweise ist der Spindelträger an einem Schlitten angeordnet, der entlang der Bearbeitungsachse an einer Linearführung geführt ist.

Es ist aber auch möglich, dass die Werkzeugspindeln jeweils individuell beweglich gelagert sind, insbesondere in Bezug auf die Bearbeitungsachse linear verschieblich gelagert sind. Es ist zum Beispiel möglich, dass eine oder mehrere Werkzeugspindeln als Einzelspindeln ausgestattet sind. Eine derartige Werkzeugspindel kann an einer Linearführung entlang der Bearbeitungsachse individuell beweglich gelagert sein.

Weiterhin ist es möglich, dass die Werkzeugspindeln an dem Spindelträger ortsfest angeordnet sind, sodass sie zum Beispiel jeweils einen gemeinsamen Vorschub haben, wenn der Spindelträger bewegt wird.

Es ist aber auch möglich, dass die Werkzeugspindeln an dem Spindelträger beweglich gelagert sind, beispielsweise drehbar oder aber auch individuell linear verstellbar, insbesondere entlang der Bearbeitungsachse. Somit ist es beispielsweise möglich, dass mindestens eine Werkzeugspindel relativ zum Spindelträger beweglich, insbesondere linear beweglich, gelagert ist. Die Werkzeugspindeln kann also beispielsweise eine Vorschubbewegung entlang der Bearbeitungsachse an dem Spindelträger durchlaufen. Eine derartige Werkzeugspindel ist beispielsweise anhand einer Linearführung am Spindelträger geführt.

An dem Spindelträger können mehrere Reihen, beispielsweise zwei oder drei Reihen, von Werkzeugspindeln vorgesehen sein, die die gleiche oder unterschiedliche Funktionen aufweisen oder gleichen oder unterschiedlichen Funktionen zugeordnet sind, beispielsweise Vorbohren, Fertigbohren und Reiben.

Es ist möglich, dass der Werkstückträger entlang der Bearbeitungsachse beweglich gelagert ist, sodass er beispielsweise eine Bewegung zu der Spindelbaugruppe hin oder von der Spindelbaugruppe weg machen kann. Beispielsweise ist der Werkstückträger an einem entsprechenden Schlitten angeordnet.

Die Bearbeitungsachse ist vorzugsweise eine in horizontaler Richtung verlaufende Achse, z.B. eine Z-Achse.

Der Spindelträger kann aber auch quer zu dieser Bearbeitungsachse beweglich gelagert sein, wofür entsprechende Linearführungen vorteilhaft vorgesehen sind. Einer jeweiligen Linearführung ist zweckmäßigerweise ein Stellantrieb zugeordnet. So ist es Beispiel Weise möglich, dass der Spindelträger quer zur Bearbeitungsachse entlang einer vertikal verlaufenden Y-Stellachse und/oder entlang einer horizontal verlaufenden X-Stellachse verstellbar ist. Somit ist es beispielsweise möglich, den Spindelträger so zu positionieren, dass mindestens eine Werkzeugspindel sozusagen in einen Zwischenraum zwischen Werkstückhaltern des Werkstückträgers eintauchen kann, wenn der Werkstückhalter und die Werkzeugspindel in Bezug auf die Bearbeitungsachse relativ zueinander hin bewegt werden.

Eine bevorzugte Ausführungsform der Erfindung sieht vor, dass der Werkstückträger an einer Linearführung quer zu der Spindelbaugruppe beweglich gelagert ist.

Zweckmäßigerweise ist vorgesehen, dass der Werkstückträger an einer Linearführung entlang einer winkelig, insbesondere rechtwinkelig, zu der Bearbeitungsachse verlaufenden, insbesondere vertikalen Stellachse beweglich gelagert ist. Die Bearbeitungsachse verläuft also beispielsweise horizontal, die Stellachse des Werkstückträgers vertikal rechtwinkelig dazu. Aber zusätzlich oder alternativ zu der Verstellung entlang der vertikalen Stellachse auch eine Verstellung des Werkstückträgers entlang einer horizontalen Stellachse, zum Beispiel einer X-Achse, möglich. Beispielsweise ist der Werkstückträger einen dafür geeigneten Linearführungen beweglich gelagert. Einer jeweiligen Linearführung ist zweckmäßigerweise ein Stellantrieb zugeordnet.

Der Werkstückträger hat beispielsweise zwei nebeneinander verlaufende Reihen von Werkstückhaltern, beispielsweise horizontal verlaufende Reihen von Werkstückhaltern. Anhand der Verstellung entlang der Stellachse kann der Werkstückträger einmal die obere Reihe von Werkstückhaltern und die somit daran angeordneten Werkstücke frontal vor den Werkzeugspindeln positionieren, und das andere Mal die untere Reihe von Werkstückhaltern.

Es ist weiterhin vorteilhaft, wenn der Werkstückträger an einer Linearführung oder der vorgenannten Linearführung zwischen dem Beladebereich und dem Entladebereich beweglich gelagert ist. Somit kann der Werkstückträger beispielsweise zum Beladen mit den Werkstücken in den Beladebereich hinein verfahren werden und zum Entladen der Werkstücke von dem Werkstückträger in Richtung des in Ladebereichs bewegt werden.

Vorteilhaft ist es, wenn der Beladebereich an einer Oberseite des Werkstückträgers und der Entladebereich an einer Unterseite des Werkstückträgers vorgesehen sind. Der Bearbeitungsbereich befindet sich zweckmäßigerweise zwischen dem Beladebereich und dem Entladebereich. Dadurch ergibt sich ein organischer Arbeitsablauf Beladen - Bearbeiten - Entladen. Es ist aber auch möglich, dass der Beladebereich und der Entladebereich direkt nebeneinander angeordnet sind und der Bearbeitungsbereich davon abgewandt ist. Mit anderen Worten muss der Bearbeitungsbereich nicht den Entladebereich und Beladebereich voneinander trennen oder zwischen diesen Bereichen angeordnet sein.

Weiterhin ist es möglich, dass der Beladebereich und der Entladebereich an einer Oberseite und einer horizontal zugänglichen Querseite des Werkstückträgers vorgesehen sind. So können beispielsweise Werkstückfördereinrichtungen besonders günstig Werkstücke am Werkstückträger platzieren oder von diesem entnehmen. Insbesondere im Falle eines Roboters oder einer sonstigen Handlingeinrichtung, die zur Beladung oder Entladung des Werkstückträgers genutzt wird, ist diese Variante vorteilhaft. Vorteilhaft ist es jedenfalls, dass eventuell empfindliche Werkstücke nach oben oder zur Seite weg aktiv am Werkstückträger platziert oder von diesem entnommen werden können, sodass sie nicht beschädigt werden.

Die einfache Konstruktionsvariante, die ebenfalls im Sinne der Erfindung zu sehen ist, ist jedoch, dass der Entladebereich an der Unterseite des Werkstückträgers vorgesehen ist, sodass die Werkstücke nach unten auf eine Werkstückfördereinrichtung, zum Beispiel ein Förderband oder dergleichen, fallen können.

An der Unterseite des Werkstückträgers kann aber auch beispielsweise eine Handlingeinrichtung oder eine sonstige Fördereinrichtung vorgesehen sein, die aktiv Werkstücke vom Werkstückträger entnimmt, sodass diese vorsichtig behandelt werden können.

Vorteilhaft ist vorgesehen, dass mindestens einer Werkstückfördereinrichtung, die der Werkzeugmaschine zugeordnet ist oder einen Bestandteil der Werkzeugmaschine bildet, Führungsmittel zum Führen von Werkstücken von der Werkstückfördereinrichtung zum Werkstückträger oder vom Werkstückträger zur Werkstückfördereinrichtung zugeordnet sind. Beispielsweise können die Führungsmittel Schrägflächen, insbesondere trichterartige Führungen oder dergleichen, umfassen. Die Führungsmittel können einen integralen Bestandteil der Werkzeugmaschine bilden oder jedenfalls dieser zu gehören.

Der Werkstückträger kann dabei nur um die Schwenkachse schwenken, um Werkstückhaltergruppen entsprechend im Bearbeitungsbereich sowie dem Beladebereich und Entladebereich zu positionieren. Es ist aber auch möglich, dass der Werkstückträger beispielsweise zum Beladen in Richtung des Beladebereichs verstellt wird, nämlich entlang der vorgenannten Stellachse nach oben, während beim Entladen ein etwas größerer Abstand zu einer Werkstückfördereinrichtungen unterhalb des Werkstückträgers relativ unproblematisch ist, da die Werkstücke gegebenenfalls etwas weiter nach unten fallen müssen, was jedoch nicht unbedingt zu Beschädigungen führen kann.

Es ist vorteilhaft, wenn die Werkstücke beim Beladen und/oder Entladen des Werkstückträgers sorgfältig und vorsichtig behandelt werden. Dementsprechend können als Werkstückförderer beispielsweise Roboter oder sonstige Handlingeinrichtungen, die die Werkstücke sozusagen sanft oder vorsichtig oder exakt am Werkstückträger positionieren oder von diesem wieder entnehmen, vorgesehen sein.

Eine bevorzugte Ausführungsform der Erfindung sieht vor, dass die Werkzeugmaschine eine Werkstückfördereinrichtung umfasst. Beispielsweise kann ein Bandförderer oberhalb oder unterhalb des Werkstückträgers angeordnet sein. Wie gesagt, ist auch eine Handlingeinrichtung, ein Roboter oder dergleichen vorteilhaft und kann dementsprechend einen Bestandteil der Werkzeugmaschine bilden.

Es ist ohne weiteres möglich, dass die Werkzeugmaschine eine speziell auf sie angepasste Werkstückfördereinrichtung aufweist, sozusagen eine Sonderwerkstückfördereinrichtung. Diese Werkstückfördereinrichtung ist optimal an die Platzverhältnisse der Werkzeugmaschine angepasst, sodass sie beispielsweise den Entladebereich oder Beladebereich entsprechend ausnutzen kann.

Denkbar ist es auch, dass am Entladebereich oder am Beladebereich eine Handlingeinrichtung vorhanden ist, die zum Umpositionieren von Werkstücken ausgestaltet ist. Somit können die Werkstücke beispielsweise innerhalb der bereits in den Beladebereich oder Entladebereich geschwenkten Werkstückhaltergruppe von einem Werkstückhalter zu einem anderen Werkstückhalter umgesetzt werden oder beispielsweise auch an demselben Werkstückhalter in einer anderen Position angeordnet werden. Beispielsweise ist es möglich, dass Werkstücke an einem Werkstückhalter umgedreht werden, sodass sie nacheinander an einander entgegengesetzten Seiten bearbeitet werden können. Es ist aber auch möglich, dass Werkstücke vom einen Werkstückhalter zum nächsten weitergegeben werden, um einen weiteren Bearbeitungsschritt zu realisieren. Betont sei, dass das Umpositionieren der Werkstücke innerhalb der bereits im jeweiligen Beladebereich oder Entladebereich befindlichen Werkstückhaltergruppe erfolgen kann. Es ist aber auch möglich, dass ein Werkstück beispielsweise von der einen Werkstückhaltergruppe entnommen wird, der Werkstückträger dann weiter schwenkt und das Werkstück dann an einer benachbarten Werkstückhaltergruppe angeordnet oder aufgespannt wird.

Der Werkstückträger hat zweckmäßigerweise einen dreieckförmigen oder rechteckigen, insbesondere quadratischen, Querschnitt oder Außenumfang. Selbstverständlich sind aber auch andere Außenumfänge möglich, beispielsweise sonstige polygonale Ausgestaltungen. Insbesondere vorteilhaft ist es, wenn jeweils einer Werkstückhaltergruppe eine vorzugsweise plane oder ebene Werkstückhalteseite des Werkstückträgers zugeordnet ist. Somit sind beispielsweise bei fünf Werkstückhaltergruppen eine pentagonale Querschnittskontur und bei sechs Werkstückhaltergruppen eine hexagonale Querschnittskontur oder ein entsprechend pentagonaler oder hexagonaler Außenumfang vorteilhaft.

Der Werkstückträger hat also beispielsweise drei Werkstückhalteseiten, vier Werkstückhalteseiten oder auch weitere Werkstückhalteseiten. Die Werkstückhalteseiten können plane oder ebene Flachseiten sein. Es ist aber auch möglich, dass eine Werkstückhalteseite einen gekrümmten Verlauf hat.

Eine besonders bevorzugte Ausführungsform sieht vor, dass der Werkstückträger balkenförmig ist oder einen Trägerbalken umfasst.

Bevorzugt ist es, wenn der Werkstückträger an seinen Längsendbereichen schwenkbar gelagert ist. Beispielsweise sind an Stirnseiten des Werkstückträgers jeweils Schwenklager vorgesehen.

Diese Schwenklager können beispielsweise an Schlitten vorgesehen sein, die ihrerseits wiederum an der bereits erwähnten Linearführung beweglich gelagert sind. Die Schlitten sind beispielsweise an einem Turm oder Ständer geführt.

Bevorzugt verläuft die Schwenkachse horizontal. Die Schwenkachse ist zweckmäßigerweise rechtwinkelig zur Bearbeitungsachse.

Die Stellachse, entlang derer der Werkstückträger quer zur Bearbeitungsachse beweglich ist, ist vorzugsweise eine Vertikalachse, z.B. eine Y-Achse.

Die Stellachse, die Bearbeitungsachse und die Schwenkachse sind zweckmäßigerweise rechtwinkelig zueinander.

An den Werkzeugspindeln können verschiedenartige Bearbeitungswerkzeuge, beispielsweise Bohrer, Fräser oder dergleichen, angeordnet werden. Erfindungsgemäß sind zerspanende Bearbeitungswerkzeuge vorgesehen.

Den vorgenannten Verstellfreiheitsgraden, beispielsweise den Linearführungen, der Schwenklagerung des Werkstückträgers, der Verstellbarkeit des Werkstückträgers entlang der Stellachse und des Spindelträgers und/oder der Werkzeugspindeln entlang der Bearbeitungsachse sind entsprechende Stellantriebe zugeordnet, zum Beispiel Linearmotoren, Spindel-Mutter-Antriebe und dergleichen.

Man kann die Werkzeugmaschine auch als eine sogenannte Mehrspindelmaschine bezeichnen.

Nachfolgend werden Ausführungsbeispiele der Erfindung anhand der Zeichnung erläutert. Es zeigen:
- Figur 1: eine perspektivische Schrägansicht einer Werkzeugmaschine,
- Figur 2: eine Frontalansicht der Werkzeugmaschine gemäß Figur 1 etwa entsprechend einer Blickrichtung R in Figur 1,
- Figur 3: eine teilweise geschnittene Seitenansicht der Werkzeugmaschine gemäß Figur 2, etwa entlang einer Schnittlinie D-D,
- Figur 4: eine Ansicht von oben auf die Werkzeugmaschine gemäß der vorstehenden Figuren,
- Figur 5: eine schematische Seitenansicht eines Werkstückträgers der Werkzeugmaschine gemäß der vorstehenden Figuren mit einem quadratischen Außenumfang,
- Figur 6: einen alternativen Werkstückträger mit einem dreieckförmigen Außenumfang in schematischer Seitenansicht,
- Figur 7: eine Anordnung mit einem weiteren Werkstückträger in schematischer Seitenansicht, der eine hexagonalen Außenumfangskontur aufweist sowie alternativ eine Spindelbaugruppe mit Werkzeugrevolvern,
- Figur 8: eine schematische Ansicht eines Spindelträgers und eines Werkstückträgers in einer ersten Position und
- Figur 9: die Anordnung gemäß Figur 8, jedoch in einer zweiten Position.

Eine Werkzeugmaschine 10 weist eine Maschinenbasis 11, beispielsweise ein sogenanntes Maschinenbett, auf, die deren Funktionsbaugruppen zur Werkstückbereitstellung und Werkstückbearbeitung trägt

An einer Oberseite 13 eines Werkstückträgerbereichs 12 der Maschinenbasis 11 ist eine Werkstückbereitstellungsvorrichtung 40 angeordnet, die zum Tragen und zum Bereitstellen von Werkstücken W dient.

Die Werkstücke W werden von Werkzeugspindeln 23-28 mit daran angeordneten Bearbeitungswerkzeugen 80, beispielsweise Bohrern, Fräswerkzeugen oder dergleichen beim Betrieb der Werkzeugmaschine 10 bearbeitet. Die Werkzeugspindeln 23-28 sind an einem Spindelträger 20 vorgesehen, der an einer Oberseite 16 eines Spindelgruppenbereichs 15 der Maschinenbasis 11 angeordnet ist.

Der Spindelgruppenbereich 15 ist an einer Längsseite 14 des Werkstückträger Bereichs 12 angeordnet. Insgesamt ergibt sich dabei beispielsweise eine T-förmige Gestalt der Maschinenbasis 11

Die Maschinenbasis 11 ist mit Füßen 17 auf einem Untergrund abgestellt.

Die Werkzeugspindeln 23-28 sind an dem Spindelträger 20 in Spindelgruppen 21, 22 gruppiert. Die Spindelgruppe 21 bildet eine erste Spindelgruppe, die Spindelgruppe 22 eine zweite Spindelgruppe. Beispielsweise sind die Werkzeugspindeln 23-25 in einer Reihe nebeneinander angeordnet, um die Spindelgruppe 21 zu bilden. Die Werkzeugspindeln 26-28 sind in einer weiteren Reihe gruppiert und bilden die Spindelgruppe 22.

Die beiden vorgenannten Reihen sind beispielsweise linienförmig, wobei auch ein gekrümmter Verlauf oder Zickzack-förmiger Verlauf ohne weiteres denkbar wäre.

Die Spindelgruppen 21, 22 bzw. die Reihenanordnungen der Spindeln 23-25 und 26-28 verlaufen nebeneinander, insbesondere horizontal nebeneinander. Die Spindelgruppe 21 bildet beispielsweise eine obere Spindelgruppe, die Spindelgruppe 22 eine untere Spindelgruppe.

Die Spindelgruppe 21, 22 können zur gleichzeitigen oder sequenziellen Bearbeitung von Werkstücken W vorgesehen sein.

Die Werkzeugspindeln 23-28 werden durch Antriebe 29 angetrieben. Die Antriebe 29 sind beispielsweise an einer von der Werkstückbereitstellungsvorrichtung 40 abgewandten Rückseite des Spindelträgers 20 angeordnet.

Der Spindelträger 20 hat eine blockartige Gestalt. Es ist möglich, dass die Werkzeugspindeln 23-28 ortsfest am Spindelträger 20 angeordnet sind. Es ist aber auch möglich, dass mindestens eine der Werkzeugspindeln 23-28 beweglich am Spindelträger 20 gelagert ist, beispielsweise linear beweglich. Bevorzugt ist es, wenn eine oder mehrere der Werkzeugspindeln 23-28 entlang einer Bearbeitungsachse Z am Spindelträger 20 linear geführt ist.

Der Spindelträger 20 ist an einer Linearführung 30 an der Oberseite 16 der Maschinenbasis 11 entlang der Bearbeitungsachse Z beweglich gelagert. Beispielsweise ist der Spindelträger 20 an einem Schlitten 31 angeordnet, der ohne weiteres auch einen integralen Bestandteil des Spindelträgers bilden kann. Der Schlitten 20 ist durch einen Antrieb 32 antreibbar, so dass er auf Schienen 33 zu der Werkstückbereitstellungsvorrichtung 40 und von dieser weg bewegt werden kann. Dadurch werden die Werkzeugspindeln 23-28 insgesamt zur Werkstückbearbeitung vor und zurück entlang der Bearbeitungsachse Z bewegt. Beispielsweise sind zwei Schienen 33 parallel nebeneinander der Oberseite 16 des Spindelgruppenbereichs 15 vorgesehen, wobei dies nur exemplarisch zu verstehen ist.

Die Werkstückbereitstellungsvorrichtung 40 umfasst beispielsweise an der Oberseite 13 des Werkstückträgerbereichs 12 angeordnete Türme oder Ständer 41. Zwischen den Ständern 41 erstreckt sich ein Werkstückträger 50, der zum Tragen und Halten der Werkstücke W dient. Der Werkstückträger 50 erstreckt sich frontal quer vor den Werkzeugspindeln 23-28 oder dem Spindelträger 20.

Der Werkstückträger 50 ist in der Art eines Balkens 56 ausgestaltet, dessen Stirnseiten 55 an den Ständern 41 abgestützt sind und an dessen Außenumfang die Werkstücke W anordenbar sind.

An den Ständern 41 sind Linearführungen 44 vorgesehen, an denen Schlitten 42 geführt sind. Die Schlitten 43 können beispielsweise durch Antriebe 43 angetrieben werden. Die Schlitten 41 sind an den Linearführungen 44 entlang einer Stellachse Y beweglich gelagert.

Die Längsenden oder Stirnseiten 55 des Werkstückträgers 50 sind an den Schlitten 42 anhand von Schwenklagern 47 um eine Schwenkachse A schwenkbar gelagert. Ein schematisch dargestellter Schwenkantrieb 48 dient zum Schwenkantreiben des Werkstückträgers 50 um die Schwenkachse A.

Die Stellachse Y verläuft rechtwinkelig zu der Bearbeitungsachse Z. Die Bearbeitungsachse Z verläuft beispielsweise horizontal, die Stellachse Y vertikal. Die Schwenkachse A verläuft ebenfalls horizontal, jedoch rechtwinkelig quer zur Bearbeitungsachse Z.

Somit kann durch Schwenken des Werkstückträgers 50 jeweils ein anderer ein anderer Bereich seines Außenumfangs zu den Werkzeugspindeln 23-28 hin orientiert sein, sodass die daran angeordneten Werkstücke W durch die Werkzeugspindeln 23-28 bearbeitet werden können.

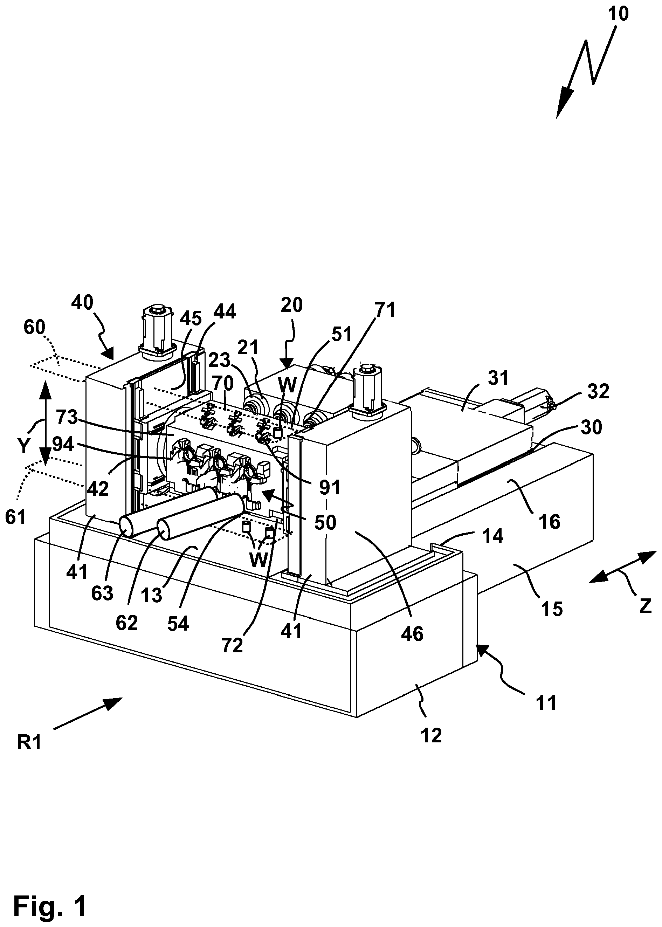

Der Werkstückträger 50 ist bei dem Ausführungsbeispiel gemäß Figuren 1-5 im Querschnitt rechteckig, insbesondere quadratisch. An seinen Längsseiten, die sich zwischen den Stirnseiten 55 erstrecken, hat der balkenartigen Werkstückträger 50 insgesamt 4 Werkstückhalteseiten 51, 52, 53 sowie 54, an denen Werkstückhalter 57 zum Halten der Werkstücke W angeordnet sind.

Die Werkstückhalteseiten 51-54 haben jeweils einen Winkelabstand von 90° zueinander. Wenn also eine der Werkstückhalteseiten 51-54 zu dem Spindelträger 20 hin geschwenkt ist und sich somit in einem Bearbeitungsbereich 71 für die Werkzeugspindeln 23-28 befindet, sind drei andere Werkstückhalteseiten 51-54 außerhalb dieses Bearbeitungsbereichs 71 positioniert , nämlich in einem Beladebereich 70, einem Entladebereich 72 sowie einem Wartungsbereich 73.

An den Werkstückhalteseiten 51-54 sind jeweils mehrere, zu Werkstückhaltergruppen 91-94 gruppierte Werkstückhalter 57 vorgesehen. Die Werkstückhalter 57 umfassen beispielsweise Spanneinrichtungen 59, mit welchen die Werkstücke W gespannt werden können. Beispielsweise sind die Werkstückhalter 51 korrespondierend zur Reihenanordnung der Werkzeugspindeln 23-25 sowie 26-28 in Reihen 58 angeordnet, insbesondere linear.

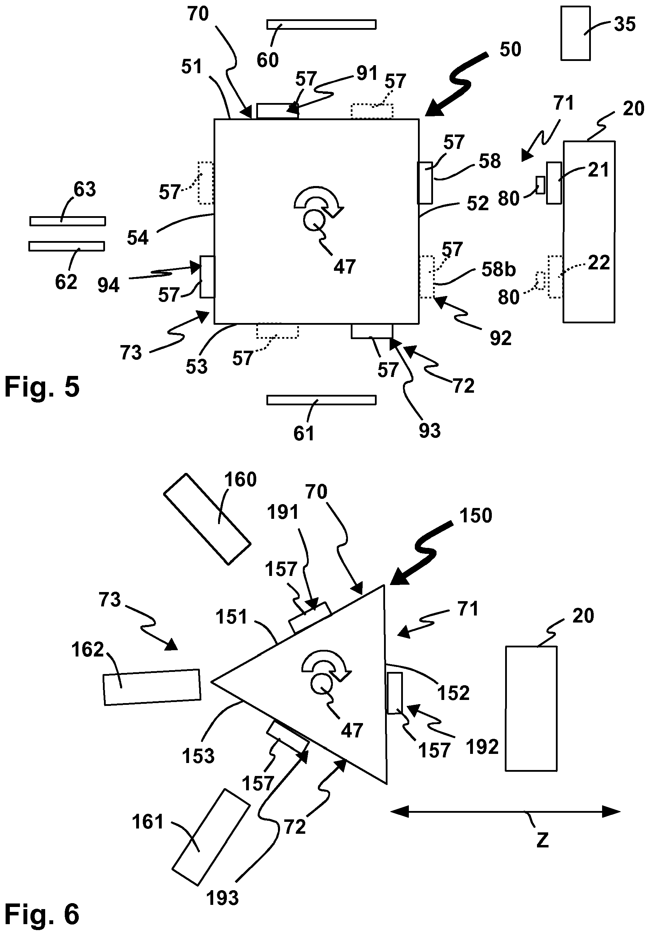

Dabei ist es beispielsweise möglich, dass nur jeweils eine einzige Reihe 58 von Werkstückhaltern 57 zwischen den Längsenden des Werkstückträgers 50 verläuft. Es ist aber auch möglich, was in Figur 5 angedeutet ist, dass beispielsweise eine oder mehrere weitere Werkstückhaltereihen vorgesehen sind, so zum Beispiel eine weitere Werkstückhaltereihe 58b.

Ein Abstand der Werkstückhalter 57 zueinander in Bezug auf die Schwenkachse A entspricht einem Abstand der Werkzeugspindeln 23-26 sowie 26-28 zueinander.

Weiterhin sind die Werkzeugspindeln 23-25 sowie 26-28 ebenso wie die Werkstückhalter 57 in einer Reihe horizontal nebeneinander angeordnet. Somit ist es möglich, dass jeweils eine Reihe von Werkzeugspindeln 23-25, mithin also die Spindelgruppe 21 oder die Spindelgruppe 22 simultan mehrere an in einer Reihe von Werkstückhaltern 57 angeordneten Werkstücke W bearbeiten kann. Dadurch ist eine sehr schnelle Bearbeitung von mehreren Werkstücken möglich, d.h. dass die Werkzeugmaschine sehr effektiv arbeitet.

Dazu trägt auch das nachfolgend beschriebene Konzept der Beladung und Entladung des Werkstückträgers 50 bei. Der Werkstückträger 50 kann nämlich gleichzeitig mit Werkstücken W beladen und entladen werden, wobei sogar während des Beladens und des Entladens noch eine Werkstückbearbeitung in dem Bearbeitungsbereich 71 möglich ist. Somit ist es grundsätzlich möglich, dass in einem einzigen Arbeitstakt der Werkstückträger 50 beladen und entladen wird, zugleich noch eine Werkstückbearbeitung stattfindet. Hinzu kommt noch eine sehr effektive Möglichkeit, den Werkstückträger 50 zu warten, weil nämlich während dieses vorgenannten Arbeitstakt des eine der Werkstückhalteseiten 51-54 im Wartungsbereich 73 positioniert ist.

Beim Ausführungsbeispiel ist die Anordnung von Beladebereich 70, Bearbeitungsbereich 71, Entladebereich 72 und Wartungsbereich 73 so getroffen, dass der Werkstückträger 50 von oben beladen wird, d.h. dass sich der Beladebereich 70 oberhalb des Werkstückträgers 50 befindet. Der Entladebereich 72 ist an einer Unterseite des Werkstückträgers 50 vorgesehen, was das Entladen sogar noch erleichtert. Werkstücke W können nämlich ganz einfach nach unten fallen und von dort weggefördert werden.

Die Werkstückbearbeitung findet seitlich statt, so dass beispielsweise dabei anfallende Späne einfach nach unten fallen können. Der Bearbeitungsbereich 71 befindet sich also zwischen dem Beladebereich 70 und dem Entladebereich 72.

Zwischen dem Entladebereich 72 und dem Beladebereich 70, gegenüber des Bearbeitungsbereichs 71, ist der Wartungsbereich 73 vorgesehen. An dem Wartungsbereich 73 ist beispielsweise eine Reinigungseinrichtung 72 und/oder eine Kontrolleinrichtung 63 zum Reinigen und zum Kontrollieren der Werkstückhalter 57 vorgesehen. Beispielsweise können die Werkstückhalter 71 durch die Reinigungseinrichtung 62 ausgeblasen, gespült oder dergleichen anderweitig gereinigt werden. Somit stehen sie sozusagen optimal aufbereitet für die Aufnahme von Werkstücken W im Beladebereich 70 zur Verfügung.

Für das Beladen des Werkstückträgers 50 ist eine Werkstückfördereinrichtungen 61 vorgesehen. Die Werkstückfördereinrichtung 60 umfasst beispielsweise ein Förderband, eine Handlingeinrichtung oder dergleichen. Es kann auch ein Roboter vorgesehen sein, der die Werkstücke W mit hoher Genauigkeit in oder an den Werkstückhaltern 57 positionieren kann.

Zum Wegfördern der durch Werkzeugspindeln 23-28 bearbeiteten Werkstücke W dient eine Werkstückfördereinrichtung 61. Die Werkstückfördereinrichtung 61 ist im Entladebereich 72 vorgesehen.

Die Werkstückfördereinrichtungen 60, 61 erstrecken sich bis zum Werkstückträger 50. Beispielsweise verlaufen die Werkstückfördereinrichtungen 60, 61 durch Durchtrittsöffnungen 45, 46 der Ständer 41 hindurch. Die Geometrien der Ständer 41 und der Werkstückförderer Einrichtungen 60, 61 können zweckmäßigerweise so aufeinander abgestimmt sein, dass eine optimale Ausnutzung des vorhandenen Bauraums gegeben ist.

Anhand der Linearführungen 44 kann der Werkstückträger 50 beispielsweise zum Beladen entlang der Stellachse Y nach oben, näher in den Bearbeitungsbereich 71 fahren. Wenn während des Beladevorgangs Werkstücke W vom Werkstückträger 50 entladen werden, ist diese geringe Verstellung des Werkstückträgers 50 nach oben in der Regel unproblematisch, da die Werkstücke W nur ein kleines Stück nach unten fallen müssen und dort von der Werkstückfördereinrichtung 61 aufgenommen werden. Insbesondere wenn die Werkstücke W außenseitig noch keine vorbestimmten Qualitätsanforderungen erfüllen müssen, also beispielsweise noch roh sind, sind allenfalls bei dem Herunterfallen auf die Werkstückfördereinrichtung 61 auftretende Beschädigungen unkritisch.

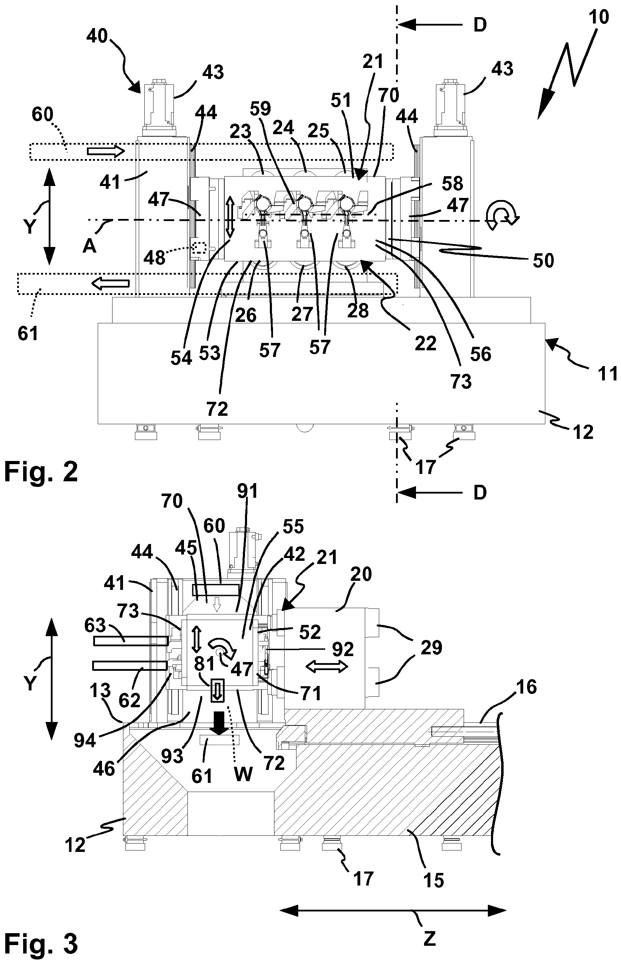

Ein erfindungsgemäßer Gedanke ist es, dass zweckmäßigerweise der Beladebereich an einer Unterseite eines Werkstückträgers vorgesehen ist. Die Werkstücke fallen also schwerkraftbedingt sozusagen von selbst nach unten, wo sie dann durch eine Werkstückfördereinrichtung weggefördert werden können. Das ist beim Ausführungsbeispiel gemäß Figuren 1-5 so ohne weiteres ersichtlich. Sollten sich Werkstücke nicht von selbst aus den Werkstückhaltern lösen, kann beispielsweise ein Ausstoßer, insbesondere ein schiebe oder dergleichen vorgesehen sein. Beispielhaft ist in Figur 3 ein derartiger Ausstoßer 81 angedeutet.

Weiterhin ist es möglich, dass die Linearführung 44 zur Positionierung der Werkstückhaltergruppen 91-94 relativ zu den Spindelgruppen 21 oder 22 dient. Somit fährt der Werkstückträger 50 beispielsweise nach oben, um die an einer Werkstückhaltergruppe 91-94 angeordneten Werkstücke W frontal vor den Werkzeugspindeln 23-25 der Spindelgruppe 21 zu positionieren, oder nach unten, um die Werkstücke W für eine Bearbeitung durch die Werkzeugspindeln 26-28 vor der Spindelgruppe 22 zu positionieren.

Die Ständer 41 sind beim Ausführungsbeispiel ortsfest an der Oberseite 13 des Werkstückträgerbereichs 12 des Maschinenbetts oder der Maschinenbasis 11 angeordnet. Denkbar wäre aber auch eine Verstellbarkeit der Ständer 41, beispielsweise entlang der Bearbeitungsachse Z. In diesem Fall wäre dann beispielsweise eine Linearführung zwischen den Ständern 41 und dem Maschinenbett oder der Maschinenbasis 11 vorteilhaft.

Ein Ausführungsbeispiel, das eine geometrische und kinematische Variante darstellt, ist in Figur 6 dargestellt. Ein Werkstückträger 150 hat beispielsweise eine im Querschnitt dreieckförmige Gestalt. Der Werkstückträger 150 kann ebenso wie der Werkstückträger 50 als Balken ausgestattet sein, sodass er beispielsweise mit den Schwenklagern 47 an den Ständern 41 schwenkbar gelagert sein kann.

An dieser Stelle sei erwähnt, dass die Linearführung 44 eine Option darstellt, d.h. dass beispielsweise die Werkstückträger 50, 150 ortsfest bezüglich der Y-Achse angeordnet sein können, also zum Beispiel nur um die Schwenkachse A schwenkbar.

Der Werkstückträger 150 hat zwischen seinen Längsenden, an denen die Schwenklager 47 vorgesehen sind, zueinander drehwinkelversetzte Werkstückhalteseiten 151, 152, 153. An diesen sind beispielsweise Werkstückhalter 157 angeordnet, die zu Werkstückhaltergruppen 191-193 gruppiert sind, beispielsweise in einer Reihe nebeneinander angeordnet sind. Ein Winkelabstand zwischen den Werkstückhalteseiten 151-153 beträgt beispielsweise 120°.

Wenn also der Werkstückträger 150 anstelle des Werkstückträgers 50 zum Einsatz kommt, ist es zweckmäßig, wenn eine der Werkstückhalteseiten 151-153 frontal vordem Spindelträger 20 steht, also rechtwinkelig zu der Bearbeitungsachse Z steht. Von den anderen der Werkstückhalteseiten 151-153 ist dann eine nach schräg unten in den Entladebereich 72, die andere nach schräg oben in den Beladebereich 70 orientiert. Im Entladebereich 72 ist beispielsweise eine Werkstückfördereinrichtung 161, beispielsweise ein Handlingroboter, ein Förderband oder dergleichen vorgesehen, um bearbeitete Werkstücke W wegzufördern. Im Beladebereich 70 ist eine Werkstückfördereinrichtung 160 zum Beladen des Werkstückträgers 150 mit Werkstücken W angeordnet.

Selbstverständlich ist auch in diesem Fall eine Wartung, beispielsweise Kontrolle, Reinigung oder dergleichen, ohne weiteres möglich. Beispielsweise kann der Werkstückträger 150 an einer Reinigungseinrichtung 162 vorbeischwenken, die zwischen dem Entladebereich 72 und dem Beladebereich 70 angeordnet ist. Beispielsweise können die Werkstückhalter 157 durch die Reinigungseinrichtung 162 gespült werden. Ohne weiteres ist auch eine Kontrolle der Werkzeughalter möglich, beispielsweise im Zusammenhang mit dem beladen und/oder Entladen zum Beispiel könnte die Kontrolleinrichtung 63, die in Figur 5 angedeutet ist, im Entladebereich 72 oder Beladebereich 70 angeordnet sein.

Es ist vorteilhaft, wenn zum Austauschen der Bearbeitungswerkzeuge an den Werkzeugspindeln 21 und/oder 22 ein insbesondere automatischer oder maschineller Werkzeugwechsler oder eine Werkzeugwechseleinrichtung 35, beispielsweise ein Handlingroboter, vorgesehen ist. Bevorzugt befindet sich die Werkzeugwechseleinrichtung 35 oberhalb des Spindelträgers 20 oder seitlich neben dem Spindelträger 20.

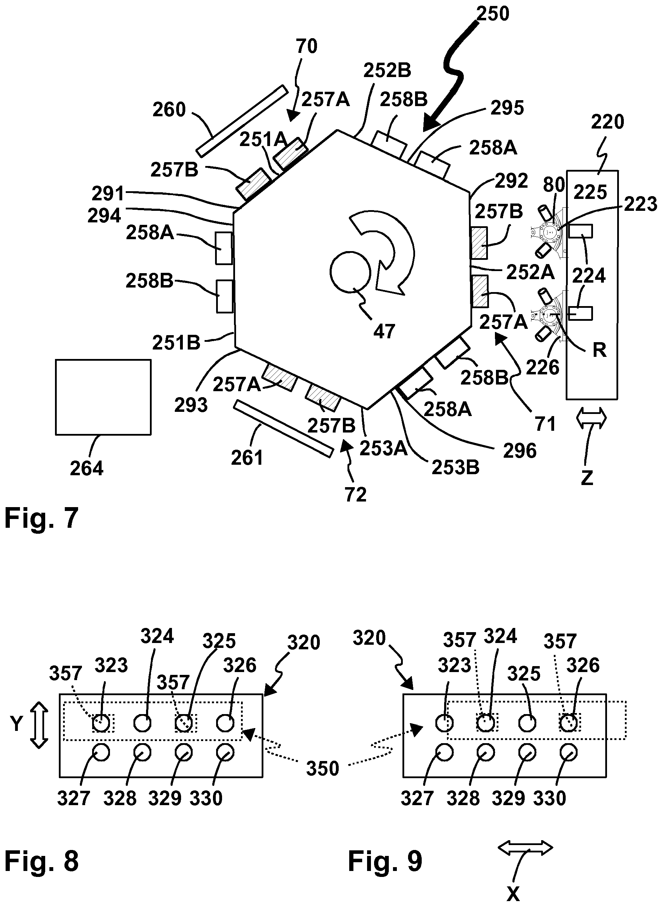

Bei dem in Figur 7 dargestellten Ausführungsbeispiel ist an einem Spindelträger 220, der ähnlich wie der Spindelträger 20 an entsprechenden Schlitten gelagert sein kann, beispielsweise entlang der Bearbeitungsachse oder Z-Achse, anstelle von einzelnen Spindeln, deren Werkzeuge nur durch einen externen Werkzeugwechsler austauschbar sind, beispielsweise den Werkzeugwechsler 35, sozusagen ein Werkzeugwechsel an Bord.

Anstelle der Spindelgruppen 22, 21 mit Einzelspindeln sind nämlich zweckmäßigerweise Werkzeugrevolver 223, 226 vorgesehen. Es versteht sich, dass mehrere Werkzeugrevolver in Reihen übereinander oder nebeneinander vorgesehen sein können, was jedoch aus Gründen der Vereinfachung nicht dargestellt ist. Die Werkzeugrevolver 223, 226 weisen beispielsweise Drehantriebe 224 auf, die zum Antreiben von an Werkzeugträgern 225 angeordneten Bearbeitungswerkzeugen 80 geeignet sind. Die Werkzeugträger 225 können um Revolverachsen R drehen.

Ein Werkstückträger 250 ist frontal vor der Spindelbaugruppe bzw. dem Spindelträger 220 angeordnet, sodass an Werkstückhaltern 257, 258 gehaltene Werkstücke W (in Figur 7 aus Gründen der Vereinfachung nicht dargestellt) durch die Spindeln der Werkzeugrevolver 223, 226 bearbeitet werden können. Zur Positionierung der Spindeln der Werkzeugrevolver 223, 226 vor einem jeweiligen Werkstückhalter 257A oder 257B kann beispielsweise vorgesehen sein, dass der Werkstückträger 250 an einer Linearführung ähnlich der Linearführung 44 in Richtung einer Y-Achse oder Y-Stellachse verfahrbar ist.

An dem Werkstückträger 250 sind insgesamt 6 Werkstückhalteseiten vorgesehen, nämlich Werkstückhalteseiten 251, 252, 253, an denen jeweils Werkstückhalter 257A und 257B, zweckmäßigerweise in Reihen mehrerer Werkstückhalter 257A und 257B nebeneinander, angeordnet sind und erste, zweite und dritte Werkstückhaltergruppen 291, 292 sowie 293 bilden. Zwischen den Werkstückhalteseiten 251A ,252A, 253A sind in einem Winkelabstand von 60° jeweils weitere Werkstückhalteseiten 251B, 252B und 253B vorgesehen, an denen jeweils Werkstückhalter 258A und 258B, zweckmäßigerweise in Reihen mehrerer Werkstückhalter 258A und 258B nebeneinander, angeordnet sind und vierte, fünfte und sechste Werkstückhaltergruppen 294, 295 sowie 296 bilden.

Der Werkstückträger 250 ermöglicht eine sehr flexible Nutzung, dergestalt, dass beispielsweise während die Werkstückhaltergruppe 292 wie in der Zeichnung dargestellt Werkstücke im Bearbeitungsbereich 71 zur Bearbeitung durch die an den Werkzeugrevolvern 223, 226 angeordneten Bearbeitungswerkzeuge 80 bereit halten, gleichzeitig Werkstücke von der Werkstückhaltergruppe 293 im Entladebereich 72 durch eine Werkstückfördereinrichtung 261 entladen und im Beladebereich 70 Werkstücke durch eine Werkstückfördereinrichtung 260 der Werkstückhaltergruppe 291 zugeführt werden können, d.h. dass der Werkstückträger 250 gleichzeitig während der Werkstückbearbeitung durch die Bearbeitungswerkzeuge des Spindelträgers 220 entladen und beladen wird. Die vierten, fünften und sechsten Werkstückhaltergruppen 294,295 und 296 sind währenddessen sozusagen inaktiv. Der Werkstückträger 250 schwenkt zwischen den jeweiligen Arbeitstakten oder Bearbeitungsschritten anhand der Schwenklager 47 um jeweils 120°, um die Werkstückhaltergruppen 291-293 jeweils vom Entladebereich 72 zum Beladebereich 70 und Bearbeitungsbereich 71 zu schwenken.

Während eines anderen Arbeitsvorganges, beispielsweise an einem anderen Arbeitstag oder während einer anderen Schicht, ist es möglich, anstelle der Werkstückhaltergruppen 291-293 die Werkstückhaltergruppen 294-296 im Einsatz zu bringen. Wieder schwenkt der Werkstückträger 250 um 120°, um die an den Werkstückhaltern 2578A und 258B gehaltenen Werkstücke vom Beladebereich 70 zum Bearbeitungsbereich 71 und anschließend zum Entladebereich 72 zu schwenken.

Die Werkstückhalter 257A, 257B einerseits und die Werkstückhalter 258A und 258B andererseits sind beispielsweise zum Halten unterschiedlicher erster und zweiter Werkstücktypen oder zum Halten des gleichen Werkstücktyps, jedoch in unterschiedlichen Positionen geeignet und/oder vorgesehen und/oder ausgestaltet.

Es ist auch möglich, dass beispielsweise eine Werkstückwechseleinrichtung 264 vorgesehen ist, die Werkstücke von einer Werkstückhalteseite 251A-253A zu einer anderen Werkstückhalteseite 251B-253B umpositioniert, beispielsweise zwischen dem Entladebereich 72 und dem Beladebereich 70. So ist es beispielsweise denkbar, dass die Werkstücke zunächst in der Positionierung an den Werkstückhalteseiten 251A-253A einer ersten Bearbeitung durch den Spindelträger 20, 220 bzw. den daran angeordneten Bearbeitungswerkzeugen unterzogen werden und in der Positionierung an den Werkstückhalteseiten 251B-253B anschließend einer zweiten Bearbeitung durch Bearbeitungswerkzeuge der an den Spindelträger 20 oder 220 angeordneten Werkzeugspindeln oder Werkzeugrevolvern. Die Werkstücke können beispielsweise durch die Werkstückwechseleinrichtung 264 in Bezug auf ihren Drehwinkel neu ausgerichtet werden oder für eine Bearbeitung von vorn und von hinten einmal an den Werkstückhaltern 257 und das andere Mal an den Werkstückhaltern 258 angeordnet werden. Man erkennt, dass in dieser zweiten Variante der Nutzung des Werkstückträgers 250 zumindest zum Schwenken zwischen dem Entladebereich 72 und der Werkstückwechseleinrichtung 264 ein Drehwinkel oder Schwenkwinkel von 60° ausreicht oder vorgesehen ist.

Vorteilhaft ist es bei der Ausführungsform gemäß Figur 7 insbesondere, dass keine Werkstückhalter ausgetauscht werden müssen, um Werkstücke unterschiedlichen Typs oder in unterschiedlicher Positionierung an demselben Werkstückträger zur Werkstückbearbeitung bereitzustellen.

Es wurde bereits angedeutet, dass anhand beispielsweise der Linearführung 44 Werkstücke frontal vor der oberen Spindelgruppe 21 oder der unteren Spindelgruppe 22 für unterschiedliche Bearbeitungsschritte positionierbar sind. Selbstverständlich könnten auch weitere Spindelbaugruppen, beispielsweise eine dritte Werkzeugspindelreihe unterhalb oder oberhalb der Spindelgruppen 21 oder 22 vorgesehen sein.

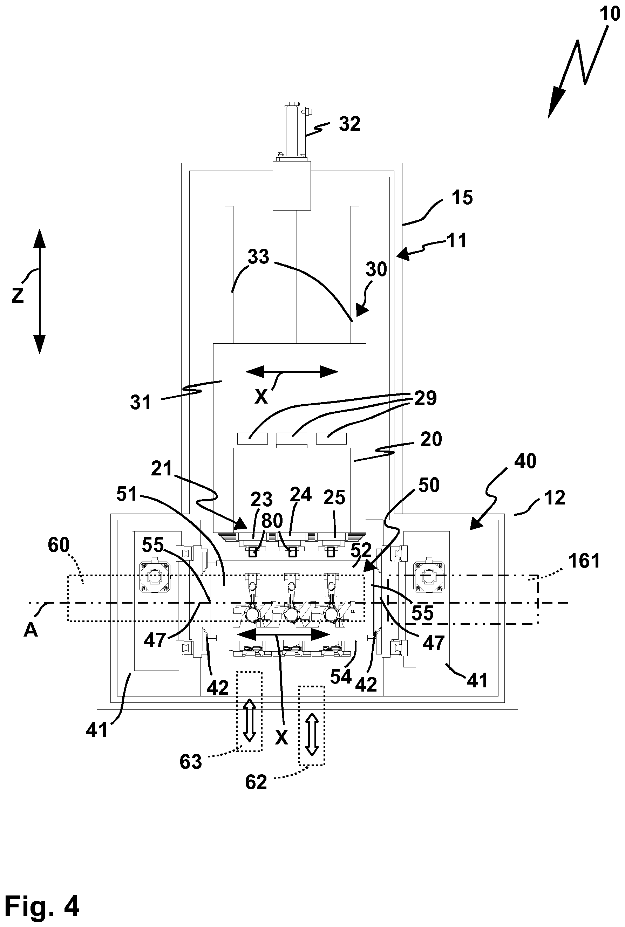

Es ist auch eine Seitwärtsbewegung entlang einer X-Achse oder X-Stellachse der Werkstückbereitstellungsvorrichtung 40 und/oder des Spindelträgers 20, 220 möglich, was in Figur 4 schematisch angedeutet ist.

Die X-Achse oder X-Stellachse ist beispielsweise orthogonal zur Bearbeitungsachse Z und horizontal verlaufend. Weiterhin ist es vorteilhaft, wenn die X-Stellachse orthogonal zur Y-Stellachse ist.

Beispielsweise können der Spindelträger 20 und/oder die Werkstückbereitstellungsvorrichtung 40 an entsprechenden Linearführungen entlang der X-Stellachse oder parallel zu der X-Stellachse verfahrbar sein, so dass die Werkzeugspindeln 23-25 oder 26-28 auch in Zwischenräume zwischen den Werkstückhaltern 57, 257, 258 fahren können, wenn der Spindelträger 20 oder der Werkstückträger 50, 150 oder 250 entlang der Bearbeitungsachse Z zu einer Werkstückbearbeitung der Werkstücke W vorgeschoben werden. Die Bearbeitungswerkzeuge, die nicht aktiv sein sollen, fahren also beispielsweise in Zwischenräume zwischen den Werkstückhaltern 57, 257, 258.

Anhand von Figur 8 und Figur 9 soll dies schematisch verdeutlicht werden. Beispielsweise sind an einem Spindelträger 320 zwei Reihen von Werkzeugspindeln 323-326 sowie 327-330 übereinander angeordnet, wobei die jeweiligen Spindelreihen horizontal verlaufen. Der zugeordnete Werkstückträger 350 kann in der bereits beschriebenen Weise beispielsweise drei oder weitere Werkstückhalteseiten bereitstellen, an denen in Reihe nebeneinander mehrere, zum Beispiel zwei, Werkstückhalter 357 angeordnet sind.

Durch eine Positionierung des Werkstückträgers 350 oder des Spindelträgers 320 entlang einer Y-Stellachse können die Werkstückhalter 357 und somit die daran angeordneten in der Zeichnung nicht dargestellten Werkstücke frontal den Werkzeugspindeln 323-326 oder 327-330 zur Werkstückbearbeitung positioniert werden.

Durch eine Positionierung des Werkstückträgers 350 oder des Spindelträgers 320 entlang einer X-Stellachse können die Werkzeugspindeln 323-326 oder 327-330 auch in Zwischenräume zwischen den Werkstückhaltern 357 positioniert werden, so dass beispielsweise in der Stellung gemäß Figur 8 die Werkzeugspindeln 323, 325 zur Werkstückbearbeitung vor den Werkstückhaltern 357 und in der Stellung gemäß Figur 9 die Werkzeugspindelreihen 324, 326 vor den Werkstückhaltern 357 positioniert sind.

## Patentansprüche

1. Werkzeugmaschine (10) mit mehreren nebeneinander angeordneten Werkzeugspindeln (23-28) einer Spindelgruppe (21, 22) zur Bearbeitung von an einem Werkstückträger (50) als Werkstückgruppe angeordneten Werkstücken (W) in einem Bearbeitungsbereich (71) der Mehrspindelmaschine, wobei die Spindelgruppe (21, 22) und der Werkstückträger (50) zur Bearbeitung der an dem Werkstückträger (50) angeordneten Werkstücke (W) relativ zueinander hin und voneinander weg entlang einer Bearbeitungsachse (Z) linear beweglich sind, wobei an den Werkzeugspindeln (23-28) zerspanende Bearbeitungswerkzeuge (80), insbesondere Bohrer, Fräser oder dergleichen, angeordnet sind, und wobei der Werkstückträger (50) um eine Schwenkachse (A) schwenkbar gelagert ist und an seinem Außenumfang mindestens eine erste Werkstückhaltergruppe (91) mit mehreren Werkstückhaltern (57) und eine zweite Werkstückhaltergruppe (92) mit mehreren Werkstückhaltern (57) aufweist, die an in einem Winkelabstand bezüglich der Schwenkachse (A) zueinander angeordneten ersten und zweiten Werkstückhalteseiten (51, 52) angeordnet sind, so dass durch eine Schwenkbewegung des Werkstückträgers (50) um die Schwenkachse (A) eine Werkstückhaltergruppe (91) mit den jeweils daran angeordneten Werkstücken (W) in den Bearbeitungsbereich (71) der Werkzeugspindeln (23-28) und eine andere Werkstückhaltergruppe (92) in einen zum Beladen des Werkstückträgers (50) mit Werkstücken (W) vorgesehenen Beladebereich (70) schwenkbar ist, **dadurch gekennzeichnet, dass** der Werkstückträger (50) mindestens eine dritte Werkstückhaltergruppe (93) mit mehreren Werkstückhaltern (57) in einem Winkelabstand zu der ersten und zweiten Werkstückhaltergruppe (91, 92) bezüglich der Schwenkachse (A) aufweist, so dass gleichzeitig eine Werkstückhaltergruppe (92) in dem Bearbeitungsbereich (71) zur Bearbeitung von Werkstücken durch die Werkzeugspindeln (23-28), eine Werkstückhaltergruppe (91) zum Beladen des Werkstückträgers (50) in dem Beladebereich (70) und eine Werkstückhaltergruppe (93) in einem zum Entladen des Werkstückträgers (50) vorgesehenen Entladebereich (72) positioniert ist.

2. Werkzeugmaschine nach Anspruch 1, **dadurch gekennzeichnet, dass** der Werkstückträger (50) mindestens eine vierte Werkstückhaltergruppe (94) mit mehreren Werkstückhaltern (57) in einem Winkelabstand zu der ersten, zweiten und dritten Werkstückhaltergruppe (91, 92, 93) bezüglich der Schwenkachse (A) für einen weiteren Arbeitsschritt, insbesondere einen Kontrollschritt oder Wartungsschritt, hinsichtlich des Werkstückträgers (50) oder der daran angeordneten Werkstücke (W) aufweist und/oder zum Halten von Werkstücken (W) in einer von der ersten, zweiten und dritten Werkstückhaltergruppe (91, 92, 93) verschiedenen Ausrichtung oder zum Halten von Werkstücken (W) eines zweiten Typs, der von dem durch die ersten, zweiten und dritten Werkstückhaltergruppe (91, 92, 93) gehaltenen ersten Typ unterscheidet.

3. Werkzeugmaschine nach Anspruch 2, **dadurch gekennzeichnet, dass** die vierte Werkstückhaltergruppe (94) zwischen zwei Werkstückhaltergruppen der ersten, zweiten und dritten Werkstückhaltergruppe (91, 92, 93) angeordnet ist oder dass die vierte Werkstückhaltergruppe (94) zwischen Werkstückhaltergruppen eines ersten Paares von Werkstückhaltergruppen der ersten, zweiten und dritten Werkstückhaltergruppe (91, 92, 93) und mindestens eine fünfte Werkstückhaltergruppe (95) zwischen mindestens Werkstückhaltergruppen mindestens eines zweiten Paares von Werkstückhaltergruppen der ersten, zweiten und dritten Werkstückhaltergruppe (91, 92, 93) angeordnet ist.

4. Werkzeugmaschine nach einem der vorhergehenden Ansprüche, **dadurch gekennzeichnet, dass** die Werkzeugspindeln (23-28) der Spindelgruppe (21, 22) und/oder die Werkstückhalter (57) einer Werkstückhaltergruppe (91, 92, 93, 94) in einer Reihe, insbesondere linear und/oder horizontal, nebeneinander angeordnet sind und/oder dass mindestens eine Werkstückhaltergruppe (91, 92, 93, 94) eine erste Reihe, insbesondere horizontal, nebeneinander angeordneter Werkstückhalter (57) und eine von der ersten Reihe verschiedene, insbesondere parallel zur ersten Reihe verlaufende und/oder horizontal verlaufende, Reihe nebeneinander angeordneter Werkstückhalter (57) aufweist.

5. Werkzeugmaschine nach einem der vorhergehenden Ansprüche, **dadurch gekennzeichnet, dass** die Spindelgruppe (21, 22) eine erste Reihe, insbesondere horizontal, nebeneinander angeordneter Werkzeugspindeln (23-28) und eine von der ersten Reihe verschiedene, insbesondere parallel zur ersten Reihe verlaufende und/oder horizontal verlaufende, Reihe nebeneinander angeordneter Werkzeugspindeln (23-28) aufweist und/oder dass die Spindelgruppe mindestens einen, vorzugsweise mehrere, Werkzeugrevolver (223, 226) aufweist.

6. Werkzeugmaschine nach einem der vorhergehenden Ansprüche, **dadurch gekennzeichnet, dass** eine geometrische und/oder zahlenmäßige Korrelation zwischen den Werkstückhaltern (57) mindestens einer Werkstückhaltergruppe (91, 92, 93, 94) den Spindeln der Spindelgruppe (21, 22) vorhanden ist und/oder dass die Anzahl von Werkstückhaltern, die in einer Reihe nebeneinander angeordnet sind, der Anzahl einer Reihe nebeneinander angeordneter Werkzeugspindeln (23-28) entspricht und/oder dass der Abstand zwischen in einer Reihe nebeneinander angeordneten Werkstückhaltern (57) dem Abstand zwischen in einer Reihe nebeneinander angeordneten Werkzeugspindeln (23-28) gleich ist.

7. Werkzeugmaschine nach einem der vorhergehenden Ansprüche, **dadurch gekennzeichnet, dass** mindestens eine Werkstückhaltergruppe (91, 92, 93, 94) oder an unterschiedlichen Werkstückhalteseiten (51-54) angeordnete Werkstückhaltergruppen (91, 92, 93, 94) mindestens zwei voneinander verschiedene Typen von Werkstückhaltern (57) aufweist.

8. Werkzeugmaschine nach einem der vorhergehenden Ansprüche, **dadurch gekennzeichnet, dass** mindestens ein Werkstückhalter (57) eine Spannvorrichtung zum Spannen eines Werkstücks, insbesondere eine bohrfutterartige Spannvorrichtung, aufweist oder dadurch gebildet ist und/oder an mindestens einem Werkstückhalter (57) ein Ausstoßer (81) zum Ausstoßen von Werkstücken (W) von dem Werkstückhalter (57) angeordnet ist.

9. Werkzeugmaschine nach einem der vorhergehenden Ansprüche, **dadurch gekennzeichnet, dass** mindestens zwei Werkzeugspindeln (23-28) der Spindelgruppe (21, 22) an einem gemeinsamen Spindelträger (20) angeordnet sind, wobei vorteilhaft vorgesehen ist, dass der Spindelträger (20) entlang der Bearbeitungsachse (Z), insbesondere anhand eines Schlittens, zu dem Werkstückträger (50) hin und von diesem weg und/oder quer zu der Bearbeitungsachse in Richtung mindestens einer Positionierachse, insbesondere entlang einer vertikal verlaufenden Y-Stellachse oder einer horizontal verlaufenden X-Stellachse, beweglich gelagert ist und/oder mindestens eine Werkzeugspindel (23-28) entlang der Bearbeitungsachse (Z) an dem Spindelträger (20) beweglich gelagert ist.

10. Werkzeugmaschine nach einem der vorhergehenden Ansprüche, **dadurch gekennzeichnet, dass** der Werkstückträger (50) an einer Linearführung (44) entlang mindestens einer winkelig zu der Bearbeitungsachse (Z), insbesondere vertikal oder horizontal, verlaufenden, Stellachse (Y) und/oder zwischen dem Beladebereich (70) und dem Entladebereich (72) beweglich gelagert ist.

11. Werkzeugmaschine nach einem der vorhergehenden Ansprüche, **dadurch gekennzeichnet, dass** der Beladebereich (70) an einer Oberseite des Werkstückträgers (50), der Entladebereich (72) an einer Unterseite oder horizontal zugänglichen Querseite des Werkstückträgers (50) und zweckmäßigerweise der Bearbeitungsbereich (71) zwischen dem Beladebereich (70) und dem Entladebereich (72) vorgesehen sind.

12. Werkzeugmaschine nach einem der vorhergehenden Ansprüche, **dadurch gekennzeichnet, dass** sie mindestens einen Wartungsbereich (73), insbesondere zur Kontrolle und/oder Reinigung der Werkstückhalter (57), aufweist, wobei der Wartungsbereich (73) zweckmäßigerweise zwischen dem Entladebereich (72) und dem Beladebereich (70), insbesondere horizontal zugänglich, oder an einer Unterseite des Werkstückträgers (50) vorgesehen ist.

13. Werkzeugmaschine nach einem der vorhergehenden Ansprüche, **dadurch gekennzeichnet, dass** sie mindestens eine Werkstückfördereinrichtung (60, 61), insbesondere einen Bandförderer und/oder einen Roboter und/oder eine an die räumlichen Verhältnisse der Werkzeugmaschine angepasste Sonderwerkstückfördereinrichtung (60, 61), zum Beladen des Werkstückträgers (50) und/oder zum Entladen des Werkstückträgers (50) aufweist und/oder dass sie mindestens eine Kontrolleinrichtung und/oder Wartungseinrichtung zum Kontrollieren oder Warten der Werkstückhalter aufweist und/oder dass sie eine Werkzeugwechseleinrichtung (35) zum Auswechseln von Bearbeitungswerkzeugen (80) der Werkzeugspindeln (23-28) aufweist.

14. Werkzeugmaschine nach einem der vorhergehenden Ansprüche, **dadurch gekennzeichnet, dass** der Beladebereich (70) und/oder der Entladebereich (72) eine Handlingeinrichtung zum Umpositionieren von Werkstücken (W) innerhalb der in den Beladebereich (70) oder Entladebereich (72) geschwenkten Werkstückhaltergruppe (91, 92, 93, 94) oder in eine benachbarte Werkstückhaltergruppe (91, 92, 93, 94) hinein.

15. Werkzeugmaschine nach einem der vorhergehenden Ansprüche, **dadurch gekennzeichnet, dass** der Werkstückträger (50) einen polygonalen, insbesondere dreieckförmigen oder rechteckigen, insbesondere quadratischen, oder hexagonalen Querschnitt oder Außenumfang aufweist und/oder balkenförmig oder als Balken (56) ausgestaltet ist und/oder an seinen beiden Längsendbereichen anhand von Schwenklagern (47) schwenkbar gelagert ist.

## Claims

1. Machine tool (10) with a plurality of tool spindles (23-28) of a spindle assembly (21, 22) arranged side by side for machining workpieces (W) located as a workpiece group on a work carrier (50) in a machining area (71) of the multi-spindle machine, wherein the spindle assembly (21, 22) and the work carrier (50) are capable of linear movement towards each other and away from each other along a machining axis (Z) for machining the workpieces (W) located on the work carrier (50), wherein chip-removing machining tools (80), in particular drills, milling cutters or the like, are mounted on the tool spindles (23-28), and wherein the work carrier (50) is pivotably mounted about a pivot axis (A) and has at its outer circumference at least one first workholder assembly (91) with several workholders (57) and at least one second workholder assembly (92) with several workholders (57) located on first and second work holding sides (51, 52) arranged at an angular distance relative to each other in respect to the pivot axis (A), so that, by means of a pivoting movement of the work carrier (50) about the pivot axis (A), one workholder assembly (91) with the workpieces respectively located thereon can be pivoted into the machining area (71) of the tool spindles (23-28) and the other workholder assembly (92) can be pivoted into a loading area (70) provided for loading the work carrier (50) with workpieces (W), **characterised in that** the work carrier (50) comprises at least one third workholder assembly (93) with several workholders (57) arranged at an angular distance relative to the first and the second workholder assembly (91, 92) in respect to the pivot axis (A), so that simultaneously one workholder assembly (92) is positioned in the machining area (71) for the machining of workpieces by the tool spindles (23-28), one workholder assembly (91) is positioned in the loading area (70) for loading the work carrier (50), and one workholder assembly (93) is positioned in an unloading area (72) provided for unloading the work carrier (50).

2. Machine tool according to claim 1, **characterised in that** the work carrier (50) comprises at least one fourth workholder assembly (94) with several workholders (57) arranged at an angular distance relative to the first, the second and the third workholder assembly (91, 92, 93) in respect to the pivot axis (A), for a further operating step, in particular a checking or maintenance step, regarding the work carrier (50) or the workpieces (W) arranged thereon, and/or for holding workpieces (W) in an orientation different from the first, the second and the third workholder assembly (91, 92, 93) or for holding workpieces (W) of a second type different from the first type held by the first, the second and the third workholder assembly (91, 92, 93).

3. Machine tool according to claim 2, **characterised in that** the fourth workholder assembly (94) is located between two workholder assemblies of the first, the second and the third workholder assembly (91, 92, 93), or **in that** the fourth workholder assembly (94) is located between workholder assemblies of a first pair of workholder assemblies of the first, the second and the third workholder assembly (91, 92, 93) and at least one fifth workholder assembly (95) is located between at least two workholder assemblies of at least one second pair of workholder assemblies of the first, the second and the third workholder assembly (91, 92, 93).

4. Machine tool according to any of the preceding claims, **characterised in that** the tool spindles (23-28) of the spindle assembly (2, 22) and/or the workholders (57) of a workholder assembly (91, 92, 93, 94) are arranged in a row, in particular linearly and/or horizontally, side by side, and/or **in that** at least one workholder assembly (91, 92, 93, 94) has a first row of workholders (57), which are in particular arranged horizontally side by side, and a row of workholders (57) arranged side by side, which differs from the first row, extending in particular parallel to the first row and/or horizontally.

5. Machine tool according to any of the preceding claims, **characterised in that** the spindle assembly (21, 22) has a first row of tool spindles (23-28), which are in particular arranged horizontally side by side, and a row of tool spindles (23-28) arranged side by side, which differs from the first row, extending in particular parallel to the first row and/or horizontally, and/or **in that** the spindle assembly comprises at least one and preferably several tool turrets (223, 226).

6. Machine tool according to any of the preceding claims, **characterised in that** there is a geometrical and/or numerical correlation between the workholders (57) of at least one workholder assembly (91, 92, 93, 94) and the spindles of the spindle assembly (21, 22), and/or **in that** the number of tool holders arranged in a row side by side corresponds to the number of tool spindles (23-28) arranged in a row side by side, and/or **in that** the distance between workholders (57) arranged in a row side by side is equal to the distance between tool spindles (23-28) arranged in a row side by side.

7. Machine tool according to any of the preceding claims, **characterised in that** at least one workholder assembly (91, 92, 93, 94) or workholder assemblies (91, 92, 93, 94) located on different workpiece holding sides (51-54) comprise(s) at least two different types of workholders (57).

8. Machine tool according to any of the preceding claims, **characterised in that** at least one workholder (57) comprises or is represented by a clamping device for clamping a workpiece, in particular a drill chuck-type clamping device, and/or **in that** an ejector (81) for ejecting workpieces (W) from the workholder (57) is provided on at least one workholder (57).

9. Machine tool according to any of the preceding claims, **characterised in that** at least two tool spindles (23-28) of the spindle assembly (21, 22) are located on a common spindle carrier (20), wherein it is advantageously provided that the spindle carrier (20) is mounted for movement along the machining axis (Z), in particular by means of a slide, towards and away from the work carrier (50) and/or at right angles to the machining axis (Z) in the direction of at least one positioning axis, in particular along a vertically oriented Y-adjustment axis or a horizontally oriented X-adjustment axis, and/or **in that** at least one tool spindle (23-28) is mounted on the spindle carrier (20) for movement along the machining axis (Z).

10. Machine tool according to any of the preceding claims, **characterised in that** the work carrier (50) is mounted for movement on a linear guide (44) along at least one adjustment axis (Y) extending at an angle to the machining axis (Z), in particular vertically or horizontally, and/or between the loading area (70) and the unloading area (72).

11. Machine tool according to any of the preceding claims, **characterised in that** the loading area (70) is provided at a top side of the work carrier (50), the unloading area (72) is provided at an underside or a horizontally accessible transverse side of the work carrier (50) and the machining area (71) is expediently provided between the loading area (70) and the unloading area (72).

12. Machine tool according to any of the preceding claims, **characterised in that** it comprises at least one maintenance area (73), in particular for checking and/or cleaning the workholders (57), the maintenance area (73) being expediently provided between the unloading area (72) and the loading area (70), being horizontally accessible in particular, or at an underside of the work carrier (50).

13. Machine tool according to any of the preceding claims, **characterised in that** it comprises at least one work handling device (60, 61), in particular a belt conveyor and/or a robot and/or a special work handling device (60, 61) adapted to the spatial proportions of the machine tool, for loading the work carrier (50) and/or for unloading the work carrier (50), and/or **in that** it comprises at least one checking device and/or maintenance device for checking or maintaining the workholders, and/or **in that** it comprises a tool change device (35) for changing machining tools (80) of the tool spindles (23-28).

14. Machine tool according to any of the preceding claims, **characterised in that** the loading area (70) and/or the unloading area (72) comprise(s) a handling device for repositioning workpieces (W) within the workholder assembly (91, 92, 93, 94) pivoted into the loading area (70) or the unloading area (72) or into an adjacent workholder assembly (91, 92, 93, 94).

15. Machine tool according to any of the preceding claims, **characterised in that** the work carrier (50) has a polygonal, in particular triangular or rectangular, in particular square, or hexagonal, cross-section or outer circumference, and/or is designed bar-shaped or as a bar (56), and/or is pivotably mounted in its two longitudinal end regions by means of pivot bearings (47).

## Revendications

1. Machine-outil (10) avec plusieurs broches porte-outil (23 - 28) disposées de manière juxtaposée d'un groupe de broches (21, 22) servant à usiner des pièces (W) disposées au niveau d'un support de pièce (50) en tant que groupe de pièces dans une zone d'usinage (71) de la machine à broches multiples, dans laquelle le groupe de broches (21, 22) et le support de pièce (50) peuvent être déplacés de manière linéaire l'un par rapport à l'autre et de manière à s'éloigner l'une de l'autre le long d'un axe d'usinage (Z) pour usiner les pièces (W) disposées au niveau du support de pièce (50), dans laquelle des outils d'usinage (80) à enlèvement de copeaux, en particulier des perceuses, des fraises ou similaires, sont disposés au niveau des broches porte-outil (23 - 28), et dans laquelle le support de pièce (50) est monté de manière à pouvoir pivoter autour d'un axe de pivotement (A) et présente au niveau de sa périphérie extérieure au moins un premier groupe de porte-pièces (91) avec plusieurs porte-pièces (57) et un deuxième groupe de porte-pièces (92) avec plusieurs porte-pièces (57), qui sont disposés au niveau de premiers et deuxièmes côtés de maintien de pièce (51, 52) disposés les uns par rapport aux autres à une distance angulaire par rapport à l'axe de pivotement (A) de sorte qu'un groupe de porte-pièces (91) avec des pièces (W) disposées respectivement au niveau de ces derniers peut pivoter dans la zone d'usinage (71) des broches porte-outil (23 - 28) et un autre groupe de porte-pièces (92) peut pivoter dans une zone de chargement (70) prévue pour charger le support de pièce (50) avec des pièces (W) par un déplacement de pivotement du support de pièce (50) autour de l'axe de pivotement (A), **caractérisée en ce que** le support de pièce (50) présente au moins un troisième groupe de porte-pièces (93) avec plusieurs porte-pièces (57) à une distance angulaire par rapport au premier et au deuxième groupe de porte-pièces (91, 92) par rapport à l'axe de pivotement (A) de sorte que sont positionnés de manière simultanée un groupe de porte-pièces (92) dans la zone d'usinage (71) pour usiner des pièces par les broches porte-outil (23 - 28), un groupe de porte-pièces (91) servant à charger le support de pièce (50) dans la zone de chargement (70) et un groupe de porte-pièces (93) dans une zone de déchargement (72) prévue pour décharger le support de pièce (50).

2. Machine-outil selon la revendication 1, **caractérisée en ce que** le support de pièce (50) présente au moins un quatrième groupe de porte-pièces (94) avec plusieurs porte-pièces (57) à une distance angulaire par rapport au premier, au deuxième et au troisième groupe de porte-pièces (91, 92, 93) par rapport à l'axe de pivotement (A) pour une étape de travail ultérieure, en particulier une étape de contrôle ou une étape d'entretien, concernant le support de pièce (50) ou les pièces (W) disposées au niveau de ce dernier et/ou pour maintenir des pièces (W) dans une orientation différente du premier, du deuxième et du troisième groupe de porte-pièces (91, 92, 93) ou pour maintenir des pièces (W) d'un deuxième type, qui se distingue du premier type maintenu par le premier, le deuxième et le troisième groupe de porte-pièces (91, 92, 93).

3. Machine-outil selon la revendication 2, **caractérisée en ce que** le quatrième groupe de porte-pièces (94) est disposé entre deux groupes de porte-pièces du premier, du deuxième et du troisième groupe de porte-pièces (91, 92, 93), ou que le quatrième groupe de porte-pièces (94) est disposé entre des groupes de porte-pièces d'une première paire de groupes de porte-pièces du premier, du deuxième et du troisième groupe de porte-pièces (91, 92, 93) et au moins un cinquième groupe de porte-pièces (95) est disposé entre au moins des groupes de porte-pièces d'au moins une deuxième paire de groupes de porte-pièces du premier, du deuxième et du troisième groupe de porte-pièces (91, 92, 93).

4. Machine-outil selon l'une quelconque des revendications précédentes, **caractérisée en ce que** les broches porte-outil (23 - 28) des groupes de broches (21, 22) et/ou les porte-pièces (57) d'un groupe de porte-pièces (91, 92, 93, 94) sont disposés en une rangée de manière juxtaposée, en particulier de manière linéaire et/ou horizontale, et/ou qu'au moins un groupe de porte-pièces (91, 92, 93, 94) présente une première rangée de porte-pièces (57) disposés de manière juxtaposée, en particulier horizontalement, et une rangée, différente de la première rangée, en particulier s'étendant de manière parallèle par rapport à la première rangée et/ou s'étendant de manière horizontale, de porte-pièces (57) disposés de manière juxtaposée.

5. Machine-outil selon l'une quelconque des revendications précédentes, **caractérisée en ce que** le groupe de broches (21, 22) présente une première rangée de broches porte-outil (23 - 28) disposées de manière juxtaposée, en particulier horizontalement, et une rangée, différente de la première rangée, s'étendant en particulier de manière parallèle par rapport à la première rangée et/ou s'étendant de manière horizontale, de broches porte-outil (23 - 28) disposées de manière juxtaposée, et/ou que le groupe de broches présente au moins une, de préférence plusieurs tourelles d'outil (223, 226).

6. Machine-outil selon l'une quelconque des revendications précédentes, **caractérisée en ce qu'**une corrélation géométrique et/ou numérique entre les porte-pièces (57) d'au moins un groupe de porte-pièces (91, 92, 93, 94) et les broches du groupe de broches (21, 22) est de mise, et/ou que le nombre de porte-pièces, qui sont disposés en une rangée de manière juxtaposée, correspond au nombre d'une rangée de broches porte-outils (23 - 28) disposées de manière juxtaposée, et/ou que la distance entre des porte-pièces (57) disposés en une rangée de manière juxtaposée est égale à la distance entre des broches porte-outil (23 - 28) disposées en une rangée de manière juxtaposée.

7. Machine-outil selon l'une quelconque des revendications précédentes, **caractérisée en ce qu'**au moins un groupe de porte-pièces (91, 92, 93, 94) ou des groupes de porte-pièces (91, 92, 93, 94) disposés au niveau de différents côtés de maintien de pièce (51 - 54) présentent au moins deux types différents les uns des autres de porte-pièces (57).

8. Machine-outil selon l'une quelconque des revendications précédentes, **caractérisée en ce qu'**au moins un porte-pièce (57) présente un dispositif de serrage servant à serrer une pièce, en particulier un dispositif de serrage à la manière d'un mandrin de serrage ou est formé par ce dernier, et/ou un éjecteur (81) servant à éjecter des pièces (W) du porte-pièce (57) est disposé au niveau d'au moins un porte-pièce (57).

9. Machine-outil selon l'une quelconque des revendications précédentes, **caractérisée en ce qu'**au moins deux broches porte-outil (23 - 28) du groupe de broches (21, 22) sont disposées au niveau d'un support de broche (20) commun, dans laquelle il est prévu de manière avantageuse que le support de broche (20) est monté de manière mobile le long de l'axe d'usinage (Z), en particulier à l'aide d'un chariot, en direction du support de pièce (50) et de manière à s'en éloigner et/ou de manière transversale par rapport à l'axe d'usinage en direction d'au moins un axe de positionnement, en particulier le long d'un axe de réglage Y s'étendant de manière verticale ou d'un axe de réglage X s'étendant de manière horizontale, et/ou au moins une broche porte-outil (23 - 28) est montée de manière mobile le long de l'axe d'usinage (Z) au niveau du support de broche (20).

10. Machine-outil selon l'une quelconque des revendications précédentes, **caractérisée en ce que** le support de pièce (50) est monté de manière mobile au niveau d'un guidage linéaire (44) le long d'au moins un axe de réglage (Y) s'étendant selon un angle par rapport à l'axe d'usinage (Z), en particulier de manière verticale ou de manière horizontale, et/ou entre la zone de chargement (70) et la zone de déchargement (72).

11. Machine-outil selon l'une quelconque des revendications précédentes, **caractérisée en ce que** la zone de chargement (70) est prévue au niveau d'un côté supérieur du support de pièce (50), la zone de déchargement (72) est prévue au niveau d'un côté inférieur ou d'un côté transversal, accessible de manière horizontale, du support de pièce (50), et de manière appropriée la zone d'usinage (71) est prévue entre la zone de chargement (70) et la zone de déchargement (72).

12. Machine-outil selon l'une quelconque des revendications précédentes, **caractérisée en ce qu'**elle présente au moins une zone d'entretien (73), en particulier servant à contrôler et/ou à nettoyer les porte-pièces (57), dans laquelle la zone d'entretien (73) est prévue de manière appropriée entre la zone de déchargement (72) et la zone de chargement (70), en particulier de manière accessible horizontalement, ou au niveau d'un côté inférieur du support de pièce (50).

13. Machine-outil selon l'une quelconque des revendications précédentes, **caractérisée en ce qu'**elle présente au moins un système de transport de pièces (60, 61), en particulier une bande transporteuse et/ou un robot et/ou un système de transport de pièces séparé (60, 61) adapté aux conditions d'espace de la machine-outil, servant à charger le support de pièce (50) et/ou servant à décharger le support de pièce (50), et/ou qu'elle présente au moins un système de contrôle et/ou un système d'entretien servant à contrôler ou à entretenir les porte-pièces, et/ou qu'elle présente un système de changement d'outil (35) servant à remplacer des outils d'usinage (80) des broches porte-outil (23 - 28).

14. Machine-outil selon l'une quelconque des revendications précédentes, **caractérisée en ce que** la zone de chargement (70) et/ou la zone de déchargement (72) présentent un système de manutention servant à repositionner des pièces (W) à l'intérieur du groupe de porte-pièces (91, 92, 93, 94) pivoté dans la zone de chargement (70) ou la zone de déchargement (72) ou dans un groupe de porte-pièces (91, 92, 93, 94) adjacent.

15. Machine-outil selon l'une quelconque des revendications précédentes, **caractérisée en ce que** le support de pièce (50) présente une section transversale ou une périphérie extérieure polygonale, en particulier de forme triangulaire ou rectangulaire, en particulier carrée, ou hexagonale et/ou est configuré de manière à présenter une forme de barre ou sous la forme d'une barre (56) et/ou est monté au niveau de ses deux zones d'extrémité longitudinale de manière à pouvoir pivoter à l'aide de paliers de pivotement (47).
